## Europäisches Patentamt
## European Patent Office
## Office européen des brevets

(19)

(11) Veröffentlichungsnummer : **0 362 468 B1**

(12) **EUROPÄISCHE PATENTSCHRIFT**

(45) Veröffentlichungstag der Patentschrift :
**08.07.92 Patentblatt 92/28**

(51) Int. Cl.$^5$ : **F16J 15/32**

(21) Anmeldenummer : **89108482.4**

(22) Anmeldetag : **11.05.89**

(54) **Wellendichtung.**

(30) Priorität : **29.09.88 DE 3833042**

(43) Veröffentlichungstag der Anmeldung :
**11.04.90 Patentblatt 90/15**

(45) Bekanntmachung des Hinweises auf die
Patenterteilung :
**08.07.92 Patentblatt 92/28**

(84) Benannte Vertragsstaaten :
**DE FR GB IT**

(56) Entgegenhaltungen :
**DE-A- 1 266 076**
**DE-A- 2 453 118**
**GB-A- 888 198**
**GB-A- 2 040 009**

(73) Patentinhaber : **Firma Carl Freudenberg**
**Höhnerweg 2-4**
**W-6940 Weinheim/Bergstrasse (DE)**

(72) Erfinder : **Ehrmann, Peter**
**Heinrich-Lanz-Strasse 1**
**W-6944 Hemsbach (DE)**
Erfinder : **Vogt, Rolf**
**Plankstadterstrasse 15**
**W-6836 Oftersheim (DE)**
Erfinder : **Kilthau, Gerhard, Dr. rer. nat.**
**Ernsttalerstrasse 18**
**W-6800 Mannheim 51 (DE)**

**Beschreibung**

Die Erfindung betrifft eine Wellendichtung nach dem Oberbegriff von Anspruch 1.

Eine solche Wellendichtung ist aus der DE-A-24 53 118 bekannt. Die Staukörper sind dabei rippenartig gestaltet. Sie schließen mit der Längsrichtung der Welle einen solcherart geneigten Winkel ein, daß auf das in den Zwischenräumen enthaltene Öl bei umlaufender Welle hydrodynamisch wirkende Kräfte ausgeübt werden, die in Richtung des abzudichtenden Raumes weisen. Die Zwischenräume sind indessen in der genannten Richtung verschlossen, wodurch sich ein Druckanstieg in den Zwischenräumen ergibt und als Folge hiervon schließlich bei sehr hohen Wellendrehzahlen ein Abheben des Lippenringes von der Oberfläche der abzudichtenden Welle. Unter normalen Betriebsbedingungen weist eine solche Wellendichtung daher nahezu keinerlei Verschleiß auf. Die angesprochene Wirkung ist indessen nur von kurzer Dauer.

Der Erfindung liegt die Aufgabe zugrunde, eine solche Wellendichtung derart weiterzuentwickeln, daß sich auch bei häufiger Unterbrechung der Wellenumdrehung im langfristigen Gebrauch eine deutliche Verschleißreduzierung ergibt.

Diese Aufgabe wird erfindungsgemäß bei einer Wellendichtung der eingangs genannten Art durch die kennzeichnenden Merkmale von Anspruch 1 gelöst. Auf vorteilhafte Ausgestaltungen nehmen die Unteransprüche Bezug.

Bei der erfindungsgemäßen Wellendichtung sind die bei nicht drehender Welle von der Zylinderfläche, der Welle und den Staukörpern umschlossenen Freiräume von kapillaraktiver Enge und dadurch bei nicht drehender und drehender Welle stets vollständig mit abzudichtendem Medium gefüllt.

Die Gefahr einer gegenseitigen Durchmischung desselben mit dem Sauerstoff der Luft ist bereits hierdurch deutlich reduziert und damit bei der Abdichtung von Schmieröl die Gefahr der Entstehung von Ölkohle.

Des weiteren ist bei der erfindungsgemäßen Wellendichtung durch die bereits bei Wellenstillstand vorliegende, vollständige Füllung der Freiräume mit abzudichtendem Medium die Anfangsschmierung bei beginnender Wellenumdrehung gegenüber den Ausführungen nach dem Stande der Technik deutlich verbessert. Das in den Freiräumen enthaltene abzudichtende Medium wird bei einer Relativverdrehung der Welle unverzüglich in den Bereich der die Welle berührenden Stirnflächen der Staukörper verlagert und wächst unmittelbar danach zu einem in sich geschlossenen, kontinuierlich durchgehenden Schmierfilm zusammen. Dieser erlangt bereits bei mittleren Wellendrehzahlen eine radiale Ausdehnung, die diejenige der Anströmflächen bei weitem überschreitet. Es kommt daher bereits in diesem Falle im wesentlichen nur noch zu einer Umwälzung des Flüssigkeitsfilmes in sich selbst, und die in Richtung des abzudichtenden Raumes weisende, axiale Förderkomponente ist dementsprechend reduziert. Sie hat lediglich eine kontinuierliche Erneuerung geringer Restvolumina der in dem Dichtspalt enthaltenen Schmierflüssigkeit zur Folge, was durchaus erwünscht ist.

Die Freiräume des Lippenringes der erfindungsgemäßen Wellendichtung sind axial sowohl in Richtung des abzudichtenden Raumes als auch in entgegengesetzter Richtung völlig offen, wodurch im Bereich der dynamischen Abdichtungszone Bestandteile des Lippenringes nicht vorhanden sind, bei denen sich als Folge ungünstiger Betriebsbedingungen eine materialschädigende Überhitzung ergeben kann.

Auch die Gefahr der Entstehung von Ölkohle ist dementsprechend reduziert, während die kapillaraktive Enge der Freiräume bei Wellenstillstand eine ausreichende Abdichtung druckloser Räume gewährleistet, wodurch auch in diesem Falle das Austreten von abzudichtendem Medium nicht mehr zu befürchten ist.

Die Staukörper können bei der erfindungsgemäßen Wellendichtung rippenähnlich gestaltet sein, was es erlaubt, im Rahmen der vorstehenden Ausführungen eine etwas intensivierte Förderwirkung zu erzielen. Im allgemeinen werden jedoch Ausführungen bevorzugt, bei denen die Staukörper noppenähnlich gestaltet sind. Insbesondere in diesem Falle wird eine gute gegenseitige Durchmischung der Bestandteile des Flüssigkeitsfilmes erreicht, welcher sich unter normalen Betriebsbedingungen zwischen der Dichtlippe und der Oberfläche der abzudichtenden Welle bildet.

Unabhängig davon, ob die Staukörper rippen- oder noppenähnlich gestaltet sind, hat es sich als vorteilhaft bewährt, wenn diese nur durch zwei konvergierende Schrägflächen begrenzt sind. Die sich bei Wellenstillstand ergebende Anlagefläche an der abzudichtenden Welle ist dementsprechend hinsichtlich ihrer Größe auf ein Minimum reduziert. Sie kommt im wesentlichen zustande als Folge der elastischen Deformierung, welche die Staukörper durch ihre Anpressung an die Oberfläche der abzudichtenden Welle erfahren.

In Fällen, in denen sich die Schrägflächen im wesentlichen quer zur Längsrichtung der Wellenachse erstrecken, hat es sich als vorteilhaft bewährt, wenn die dem abzudichtenden Raum zugewandte Schrägfläche der Achse der Welle unter einem steileren Winkel zugeordnet ist als die axial entgegengesetzte Schrägfläche. Die in Richtung des abzudichtenden Raumes weisende Förderkomponente bei drehender Welle wird hierdurch verstärkt.

Die einzelnen Staukörper können einander im Zuge von durchgehend gedachten Linien zugeordnet sein, was es erlaubt, die von ihnen bewirkten Förderwirkungen in der einen oder in der anderen Richtung zu ver-

2

stärken. Dementsprechend ist es möglich, die einzelnen Staukörper im Zuge von gedachten Linien anzuordnen, die geradlinig oder bogenförmig ausgebildet sind. Auch eine Anordnung im Zuge von gedachten Linien, die S-förmig gekrümmt und gegebenenfalls ineinander übergehend ausgebildet sind, ist möglich. Die Zylinderfläche hat regelmäßig eine größere axiale Ausdehnung als die Gesamtheit der Staukörper.

Die Dichtlippe der erfindungsgemäßen Wellendichtung kann im Bereich der dynamischen Abdichtungszone mit Staukörpern versehen sein, die in axialer Richtung einen Abstand voneinander haben. Die insgesamt erhaltene, axiale Förderwirkung läßt sich hierdurch deutlich reduzieren, was besonders deutlich in Erscheinung tritt, wenn die durch den Abstand gebildeten Lücken von in Umfangsrichtung benachbarten Staukörpern in derselben Radialebene der Wellenachse angeordnet sind.

Eine weitere Steigerung des diesbezüglichen Effektes läßt sich erzielen, wenn in den Lücken eine durchgehende, sich in Umfangsrichtung erstreckende Hilfsrippe angeordnet ist und wenn die Hilfsrippe und die Staukörper eine im wesentlichen übereinstimmende Erstreckung in radialer Richtung haben. Betriebsbedingte Druckschwankungen innerhalb des abzudichtenden Raumes können hierdurch wirksam aufgefangen werden. Es ist indessen sicherzustellen, daß die in Richtung der Außenseite vorgelagerten Staukörper während des Wellenanlaufes in ausreichendem Maße geschmiert werden. Unter diesem Gesichtspunkt sollte die radiale Erstreckung der Hilfsrippe eher etwas geringer bemessen sein als diejenige der Staukörper.

Unter normalen Betriebsbedingungen hat es sich als vorteilhaft bewährt, wenn die Lücke etwa im mittleren Bereich der axialen Erstreckung der Zylinderfläche angeordnet ist. Sowohl aus der Richtung des abgedichteten Raumes als auch aus der Umgebung auftreffende Störungen des Abdichtungsverhaltens lassen sich hierdurch wirksam unterdrücken.

Die mit der erfindungsgemäßen Wellendichtung erzielten Vorteile bestehen insbesondere in der Erzielung eines über lange Zeiträume gleichbleibend guten Abdichtungsergebnisses. Darüber hinaus wird bei der Abdichtung von Schmieröl die Bildung und gegebenenfalls Anlagerungen von Ölkohle im Bereich der dynamischen Abdichtungszone wirksam unterdrückt.

Der Gegenstand der Erfindung wird nachfolgend anhand der in der Anlage beigefügten Zeichnungen weiter erläutert. Es zeigen:

Figur 1 eine Wellendichtung der erfindungsgemäßen Art in halbgeschnittener Darstellung.

Figur 2 eine vergrößerte Darstellung der dynamischen Abdichtungszone der Wellendichtung nach Figur 1.

Figuren 3 bis 10 verschiedene Ausführungsformen von Dichtflächen der erfindungsgemäßen Wellendichtung, jeweils in der Draufsicht und in quergeschnittener Darstellung.

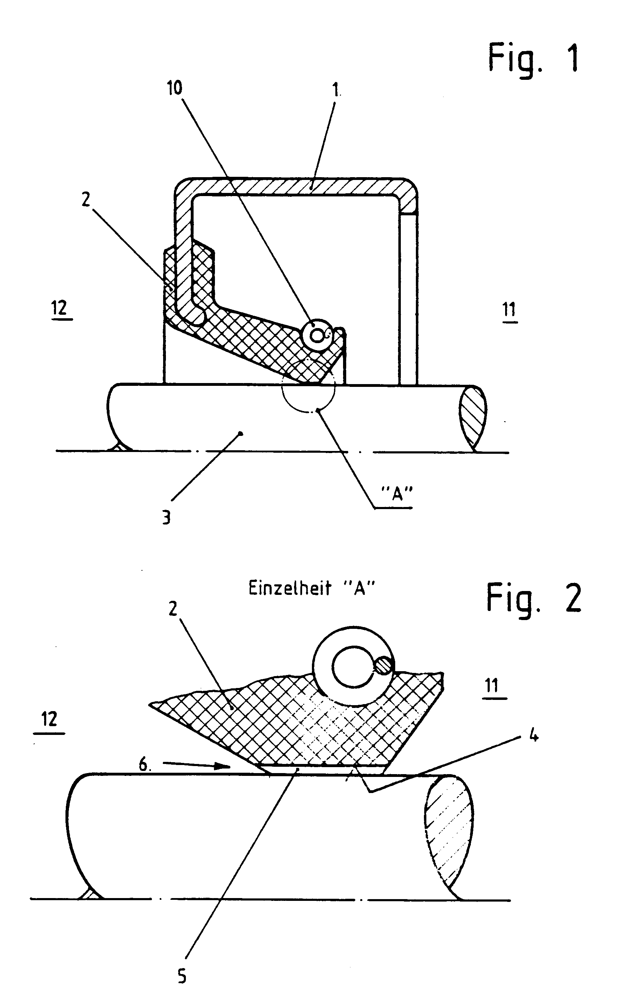

Figur 1 zeigt eine Wellendichtung der erfindungsgemäßen Art während ihrer bestimmungsgemäßen Verwendung in halbgeschnittener Darstellung. Sie besteht im wesentlichen aus dem metallischen Versteifungsring, der ein winkelförmiges Profil hat mit einem an den in radialer Richtung nach innen weisenden Schenkel anvulkanisierten Lippenring 2 aus gummielastischen Werkstoff.

Der Lippenring weist eine Dichtlippe auf, deren Dichtfläche durch die Kraft einer Ringwendelfeder 10 an die Oberfläche der abzudichtenden Welle 3 angepreßt wird.

Die Dichtfläche ist in sich untergliedert und umfaßt herstellungsbedingt zum einen die die abzudichtende Welle während der bestimmungsgemäßen Verwendung koaxial umschließende Zylinderfläche 4 und den aus der Zylinderfläche in radialer Richtung nach innen vorspringenden, gleichmäßig in Umfangsrichtung verteilten Staukörpern 5, welche einstückig mit dem Lippenring erzeugt sind. Die Zylinderfläche hat im allgemeinen eine axiale Länge von 0,5 bis 2 mm, während die radiale Erstreckung der Staurippen maximal 0,1 mm beträgt. Die bei nicht drehender Welle von der Zylinderfläche 4, der Welle 3 und den Staukörpern 5 umschlossenen Freiräume 6 sind dadurch von kapillaraktiver Enge und auch bei nicht drehender Welle stets vollständig mit abzudichtender Flüssigkeit gefüllt. Die Freiräume 6 sind axial sowohl in Richtung des abzudichtenden Raumes 11 als auch in entgegengesetzter Richtung 12 völlig offen.

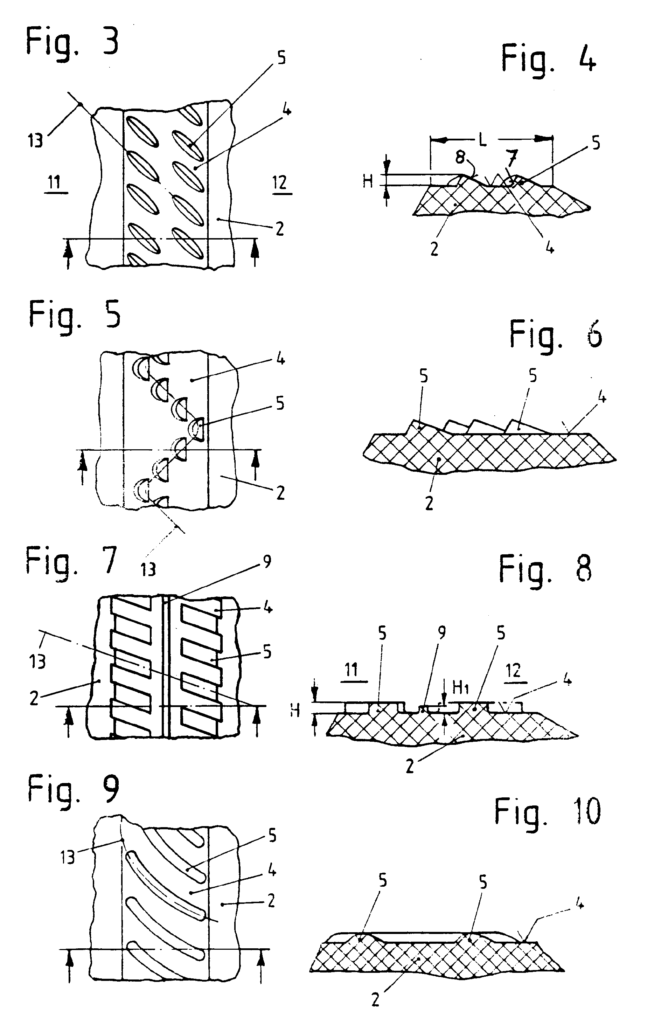

Einige beispielhafte Ausgestaltungsformen für die Ausbildung der Staukörper werden nachfolgend anhand der Figuren 3 bis 10 beschrieben.

Bei der Ausführung nach Figur 3 sind die Staukörper 5 rippenähnlich gestaltet und im Zuge von gedachten Linien 13 angeordnet, die geradlinig verlaufend ausgebildet sind. Die Staukörper sind etwa im mittleren Bereich ihrer axialen Erstreckung durch Lücken unterbrochen, welche in derselben Radialebene der Dichtungsachse angeordnet sind. Hierdurch ergibt sich während der bestimmungsgemäßen Verwendung einer solchen Wellendichtung eine Zone verminderter Flüssigkeitsumwälzung.

Druckveränderungen, die aus der Richtung des abzudichtenden Raumes 11 oder aus entgegengesetzter Richtung 12 auf die Dichtung einwirken vermögen sich dadurch weniger nachteilig auszuwirken.

Figur 4 zeigt den vorstehend in der Draufsicht beschriebenen Ausschnitt aus einem Lippenring der erfindungsgemäßen Wellendichtung in längsgeschnittener Darstellung. Es ist zu ersehen, daß die Staukörper 5 im wesentlichen durch zwei konvergierende Schrägflächen begrenzt sind, von denen die dem abgedichteten Raum zugewandte Schrägfläche 7 einen steileren Winkel mit der Dichtungsaschse einschließt als die entgegengesetzte Schrägfläche 8. Die axiale Länge der Zylinderfläche ist mit L bezeichnet, die radiale Erstreckung der Staurippen H.

Figuren 5 und 6 zeigen in Draufsicht und Längsschnitt eine alternative Ausführung der Dichtfläche, bei der auf der Zylinderfläche 4 dachziegelähnlich ausgebildete Staukörper 5 im Zuge einer gedachten Linie 13 angeordnet sind, welche die abzudichtende Welle während der bestimmungsgemäßen Verwendung einer solchen Dichtung sinuskurvenförmig umschließt. Die einzelnen Staukörper 5 werden auch in diesem Falle nur durch zwei konvergierende Schrägflächen begrenzt, von denen die der Außenluft zugewandte im wesentlichen eben und die dem abzudichtenden Raum zugewandte in sich gewölbt ausgebildet ist. In Umfangsrichtung sind die einzelnen Staukörper so weit gegeneinander versetzt, daß sich in axialer Richtung eine gegenseitige Überlappung ergibt.

Figuren 7 und 8 zeigen in Draufsicht und Längsschnitt eine Ausführung, bei der die Staukörper 5 geradlinig gestaltet und im Zuge geradlinig ausgebildeter, gedachter Linien 13 angeordnet sind. Sie haben ein im wesentlichen rechteckig begrenztes Profil und sind in Längsrichtung durch Lücken unterbrochen, die in derselben Radialebene der Dichtungsachse angeordnet sind. Mittig ist innerhalb der Lücken eine durchgehende, sich in Umfangsrichtung erstreckende Hilfsrippe 9 angeordnet.

Diese hat eine Höhe $H_1$, welche geringfügig kleiner ist als die Höhe H der Staukörper 5. Die von diesen, der Zylinderfläche 4 und der Oberfläche der abzudichtenden Welle während der bestimmungsgemäßen Verwendung umschlossenen Freiräume sind dadurch auch auf der der Außenluft zugewandten Seite der Hilfsrippe 9 stets vollständig mit abzudichtendem Medium gefüllt, was eine gute Schmierung der dort befindlichen Teile der Staurippen während des Wellenanlaufes gewährleistet. Darüber hinaus ergibt sich eine verbesserte Gleichmäßigkeit der erzielten Abdichtwirkung in bezug auf Druckbelastungen aus irgendeiner Richtung.

Bei der in den Figuren 9 und 10 in Draufsicht und Längsschnitt gezeigten Ausführung sind die Staukörper 5 rippenähnlich gestaltet und der Form gedachter Linien 13 angepaßt, welche einen bogenförmigen Verlauf haben. Ihr Profil ist im vorspringenden Teil gerundet ausgebildet, wobei die dem abzudichtenden Raum zugewandte Flankenfläche der Dichtungsachse unter einem steileren Winkel zugeordnet ist als die entgegengesetzte Flankenfläche. Auch hierdurch wird wiederum eine stärkere Förderwirkung in Richtung des abgedichteten Raumes erhalten, was die Erzielung einer Abdichtwirkung gewährleistet.

Die Förderwirkung ist jedoch insgesamt und unter normalen Betriebsbedingungen dermaßen gering, daß eine meßbare Sogwirkung auf die außenseitig an die Dichtung angrenzende Luft nicht ausgeübt wird. Die Gefahr eines Eintrages von Fremdstoffen oder Sauerstoff in den Bereich der dynamischen Abdichtungszone ist daher nicht vorhanden, die Gebrauchsdauer auch in diesem Falle deutlich verbessert.

**Patentansprüche**

1. Wellendichtung, umfassend einen Versteifungsring (1) und einen damit verbundenen Lippenring (2) aus polymerem Werkstoff, bei der der Lippenring eine die Welle (3) in einem Abstand umschließende Zylinderfläche (4) aufweist, auf der radial in Richtung der Welle vorspringende Staukörper (5) angeordnet sind mit einer Anströmfläche, die der Längsrichtung der Welle unter einem spitzen Winkel zugeordnet ist, dadurch gekennzeichnet, daß die bei nicht drehender Welle (3) von der Zylinderfläche (4), der Welle (3) und den Staukörpern (5) umschlossenen Freiräume (6) von kapillaraktiver Enge sind und daß die Freiräume (6) axial sowohl in Richtung des abzudichtenden Raumes als auch in entgegengesetzter Richtung völlig offen sind.

2. Wellendichtung nach Anspruch 1, dadurch gekennzeichnet, daß die Staukörper (5) rippenähnlich gestaltet sind.

3. Wellendichtung nach Anspruch 1 bis 2, dadurch gekennzeichnet, daß die Zylinderfläche (4) die Staukörper (5) axial in beiden Richtungen überragt.

4. Wellendichtung nach Anspruch 1 oder 3, dadurch gekennzeichnet, daß die Staukörper (5) noppenähnlich gestaltet sind.

5. Wellendichtung nach einem der Ansprüche 2 bis 4, dadurch gekennzeichnet, daß die Staukörper durch nur zwei konvergierende Schrägflächen begrenzt sind.

6. Wellendichtung nach Anspruch 5, dadurch gekennzeichnet, daß die Schrägflächen im wesentlichen quer zur Längsrichtung der Welle (3) angeordnet sind und daß die dem abzudichtenden Raum zugewandte Schrägfläche (7) und die Achse der Welle (3) einen steileren Winkel einschließen als die axial entgegengesetzte Schrägfläche (8).

7. Wellendichtung nach Anspruch 1 bis 6, dadurch gekennzeichnet, daß die Staukörper (5) einander im Zuge von durchgehend gedachten Linien zugeordnet sind.

8. Wellendichtung nach Anspruch 7, dadurch gekennzeichnet, daß die gedachten Linien geradlinig sind.

4

9. Wellendichtung nach Anspruch 8, dadurch gekennzeichnet, daß die gedachten Linien bogenförmig sind.

10. Wellendichtung nach Anspruch 9, dadurch gekennzeichnet, daß die gedachten Linien S-förmig geschwungen sind.

11. Wellendichtung nach Anspruch 10, dadurch gekennzeichnet, daß die gedachten Linien ineinander übergehend ausgebildet sind.

12. Wellendichtung nach Anspruch 1 bis 11, dadurch gekennzeichnet, daß in axialer Richtung jeweils wenigstens zwei durch einen Abstand getrennte Staukörper (5) vorgesehen sind.

13. Wellendichtung nach Anspruch 12, dadurch gekennzeichnet, daß die durch die Abstände gebildeten Lücken in Umfangsrichtung benachbarter Staukörper (5) in derselben Radialebene angeordnet sind.

14. Wellendichtung nach Anspruch 13, dadurch gekennzeichnet, daß in den Lücken eine durchgehende, sich in Umfangsrichtung erstreckende Hilfsrippe angeordnet ist und daß die Hilfsrippe und die Staukörper eine im wesentlichen übereinstimmende Erstreckung in radialer Richtung haben.

15. Wellendichtung nach Anspruch 13 bis 14, dadurch gekennzeichnet, daß die Lücke etwa im mittleren Bereich der axialen Erstreckung der Zylinderfläche (4) angeordnet ist.


## Claims

1. A shaft seal comprising a reinforcing ring (1) and a lip ring (2) of polymeric material connected to the latter, in which the lip ring has a cylindrical surface (4) which surrounds the shaft (3) at a distance and on which are arranged baffle elements (5) projecting radially in the direction of the shaft and having an incident-flow surface which is disposed at an acute angle to the longitudinal direction of the shaft, characterised in that the free spaces (6) enclosed by the cylindrical surface (4), the shaft (3) and the baffle elements (5) when the shaft (3) is not rotating are of a narrowness which gives rise to a capillary action and in that the free spaces (6) are axially completely open, both in the direction of the space to be sealed off and in the opposite direction.

2. A shaft seal according to claim 1, characterised in that the baffle elements (5) are of rib-like configuration.

3. A shaft seal according to either of claims 1 and 2, characterised in that the cylindrical surface (4) projects beyond the baffle elements (5) axially in both directions.

4. A shaft seal according to claims 1 or 3, characterised in that the baffle elements (5) are of knob-like configuration.

5. A shaft seal according to any of claims 2 to 4, characterised in that the baffle elements are bounded by just two converging oblique surfaces.

6. A shaft seal according to claim 5, characterised in that the oblique surfaces are arranged essentially transversely to the longitudinal direction of the shaft (3) and in that the oblique surface (7) which faces the space to be sealed off and the axis of the shaft (3) enclose a steeper angle than the axially opposite oblique surface (8).

7. A shaft seal according to any of claims 1 to 6, characterised in that the baffle elements (5) are associated with one another along continuous imaginary lines.

8. A shaft seal according to claim 7, characterised in that the imaginary lines are rectilinear.

9. A shaft seal according to claim 8, characterised in that the imaginary lines are arcuate.

10. A shaft seal according to claim 9, characterised in that the imaginary lines have a S-shaped curvature.

11. A shaft seal according to claim 10, characterised in that the imaginary lines are formed in such a way that they merge into one another.

12. A shaft seal according to any of claims 1 to 11, characterised in that in each case at least two baffle elements (5) separated by a spacing are provided in the axial direction.

13. A shaft seal according to claim 12, characterised in that the gaps, formed by the spacings, between circumferentially adjacent baffle elements (5) are arranged in the same radial plane.

14. A shaft seal according to claim 13, characterised in that a continuous auxiliary rib extending in the circumferential direction is arranged in the gaps and in that the auxiliary rib and the baffle elements have an essentially corresponding extent in the radial direction.

15. A shaft seal according to either of claims 13 and 14, characterised in that the gap is arranged approximately in the central region of the axial extent of the cylindrical surface (4).


## Revendications

1. Garniture étanche d'un arbre comprenant un anneau raidisseur (1) et un anneau à lèvres (2) formé de matériaux polymères qui y est relié, dans laquelle l'anneau à lèvres présente une surface cylindrique (4) entourant avec un écart l'arbre (3), sur laquelle sont disposées radialement en direction de l'arbre des chicanes (5) saillantes ayant une surface d'afflux qui est associée en un angle aigu à la direction longitudinale de l'arbre, caractérisée en ce que les espaces libres (6) circonscrits par la surface cylindrique (4), l'arbre (3) et les chicanes (5), si l'arbre (3) ne tourne pas, sont d'une étroitesse garantissant une activité capillaire et que les espaces libres (6) sont axialement complètement ouverts aussi bien en direction de l'espace qu'on doit rendre étanche qu'en direction opposée.

2. Garniture étanche d'un arbre selon la revendication 1, caractérisée en ce que les chicanes (5) ont la forme de nervures.

3. Garniture étanche d'un arbre selon les revendications 1 à 2, caractérisée en ce que la surface cylindrique (4) dépasse les chicanes (5) axialement dans les deux sens.

4. Garniture étanche d'un arbre selon la revendication 1 ou 3, caractérisée en ce que les chicanes (5) ont la forme de nopes.

5. Garniture étanche d'un arbre selon l'une quelconque des revendications 2 à 4, caractérisée en ce que les chicanes sont limitées par seulement deux surfaces obliques convergentes.

6. Garniture étanche d'un arbre selon la revendication 5, caractérisée en ce que les surfaces obliques sont disposées dans l'essentiel en sens transversal à la direction longitudinale de l'arbre (3) et que la surface oblique (7), tournée vers l'espace à rendre étanche, et l'axe de l'arbre (3) renferment un angle plus obtus que la surface oblique (8) axialement opposée.

7. Garniture étanche d'un arbre selon les revendications 1 à 6, caractérisée en ce que les chicanes (5) sont associées les unes aux autres selon des lignes imaginaires continues.

8. Garniture étanche d'un arbre selon la revendication 7, caractérisée en ce que les lignes imaginaires sont rectilignes.

9. Garniture étanche d'un arbre selon la revendication 8, caractérisée en ce que les lignes imaginaires sont arquées.

10. Garniture étanche d'un arbre selon la revendication 9, caractérisée en ce que les lignes imaginaires sont des courbes en forme de S.

11. Garniture étanche d'un arbre selon la revendication 10, caractérisée en ce que les lignes imaginaires sont formées de façon à se confondre.

12. Garniture étanche d'un arbre selon les revendications 1 à 11, caractérisée en ce qu'on a prévu en direction axiale à chaque fois au moins deux chicanes (5) séparées par un écart.

13. Garniture étanche d'un arbre selon la revendication 12, caractérisée en ce que les lacunes formées par les écarts sont disposées en direction circonférentielle de chicanes (5) voisines dans le même plan radial.

14. Garniture étanche d'un arbre selon la revendication 13, caractérisée en ce qu'on a disposé dans les lacunes une nervure auxiliaire continue, s'étendant en direction circonférentielle, et que la nervure auxiliaire et les chicanes s'étendent, dans l'essentiel de façon coïncidente, en direction radiale.

15. Garniture étanche d'un arbre selon les revendications 13 à 14, caractérisée en ce que la lacune est disposée environ au milieu de l'extension axiale de la surface cylindrique (4).

EP 0 362 468 B1

Fig. 1

Einzelheit "A"

Fig. 2

Fig. 3

Fig. 4

Fig. 5

Fig. 6

Fig. 7

Fig. 8

Fig. 9

Fig. 10